# EUROPEAN PATENT SPECIFICATION

(11) **EP 4 026 742 B1**
(45) Date of publication and mention of the grant of the patent: **30.09.2026**
(21) Application number: 21215032.0
(22) Date of filing: 16.12.2021
(51) Int. Cl.: B60W 20/00, B60W 10/08

(54) **VEHICLE MOTOR CONTROL APPARATUS**
FAHRZEUG MOTOR STEUERGERÄT
APPAREIL DE COMMANDE DE MOTEUR DE VÉHICULE

(30) Priority: 12.01.2021 JP 2021003077
(43) Date of publication of application: 13.07.2022
(73) Proprietor: Suzuki Motor Corporation, Shizuoka 432-8611 (JP)
(72) Inventor: Sato, Yuki, Hamamatsu-shi, 432-8611 (JP)
(74) Representative: Henkel & Partner mbB

(56) References cited:
- EP-A2- 2 028 353
- US-A- 6 114 828
- US-A1- 2008 242 463
- US-A1- 2010 250 037
- US-A1- 2017 197 610
- US-A1- 2018 045 309

## Description

### [Technical Field]

The present invention relates to a vehicle control apparatus.

### [Background Art]

JP H11-215 687 A discloses a technique for an electric vehicle to reduce motor torque when locked uphill, easily escape from a locked state and prevent damage to a switching element.

### [Summary of Invention]

### [Technical Problem]

However, if the vehicle gets over steps with only the motor torque while a command value of the motor torque is high and the motor rotation speed fluctuates repeatedly near a threshold of the motor rotation speed at which motor lock is determined. This may result in an intermittent motor locked state, causing the temperature of the switching element to rise. In spite of this, it is not possible to determine the motor lock state.

In order to determine such a situation, the threshold of the motor rotation speed may be increased, but the region determined as the motor lock in such a case becomes wider, making the motor torque more likely to be restricted, which may degrade drivability during normal driving.

US 2008/242463 A1 discloses a control device for a hybrid vehicle that includes an engine and a motor-generator connected to the engine through a power split device, If, upon acceleration in a running state, a situation arises where the rotational speed of the motor-generator enters a lockup area and cannot pull out of the lockup state by shifting the rotational speed of the motor-generator from a normal rotation area to a reverse rotation area, the engine is controlled such that a torque produced by the engine is decreased. Thus, the rotational speeds of the engine and the motor-generator are reduced completely, so that the motor-generator can pull out of the lockup state without increasing the torque produced by the motor-generator any more.

US 2017/197610 A1 discloses a control device for a vehicle that includes an electric motor as a drive power device. The control device is to suppress the generation of surplus power without restricting a torque-down amount or a decrease rate in a case where torque-down control is performed in a gear shift. To this end it is determined whether or not an automatic transmission is in a pre-gear shift state determined in advance prior to a power-ON gear shift in which torque-down control is performed. When the automatic transmission is in the pre-gear shift state, since a required free capacity is secured in a capacitor, torque-down control of a second motor generator is performed in a gear shift, and even if surplus power is generated in a power supply circuit due to the torque-down control, the surplus power can be quickly absorbed using the capacitor.

US 2010/250037 A1 discloses a hybrid drive device that includes a transfer torque estimation unit for estimating a transfer torque transferred by a lock-up clutch with the lock-up clutch slipping, and a target rotational speed determination unit for determining a target rotational speed of the rotary electric machine to be achieved in the rotational speed control on the basis of the transfer torque estimated by the transfer torque estimation unit.

It is therefore an objective of the present invention to provide a vehicle control apparatus capable of protecting a switching element from temperature rise caused by intermittent motor lock while preventing drivability degradation.

### [Solution to Problem]

In order to solve the above-described problem, the present invention is a control apparatus of a vehicle with the features of claim 1 including a motor and an inverter that supplies AC electric power to the motor using a switching element, the control apparatus including a control unit that makes a first determination to determine whether a first determination condition that torque of the motor is equal to or larger than first torque and that a rotation speed of the motor is equal to or less than a first rotation speed is met for a first determination time or not, performs first torque restriction control to restrict the torque of the motor in a case where it is determined that the first determination condition is met for the first determination time, makes a second determination to determine whether a second determination condition that the torque of the motor is equal to or larger than second torque which is smaller than the first torque and that the rotation speed of the motor is equal to or less than a second rotation speed which is higher than the first rotation speed is met for a second determination time or not, performs second torque restriction control to restrict the torque of the motor in a case where it is determined that the second determination condition is met for the second determination time, and makes the second determination time longer than the first determination time.

### [Advantageous Effect of Invention]

Thus, according to the present invention, it is possible to protect a switching element from temperature rise caused by intermittent motor lock while preventing drivability degradation.

### [Brief Description of Drawings]

[Figure 1] Figure 1 is a schematic configuration diagram of a vehicle according to an embodiment of the present invention.
[Figure 2] Figure 2 is a diagram illustrating a relationship between a first determination condition and a second determination condition of the vehicle control apparatus according to the embodiment of the present invention.
[Figure 3] Figure 3 is a flowchart illustrating a procedure of a torque restriction control process of the vehicle control apparatus according to the embodiment of the present invention.
[Figure 4] Figure 4 is a time chart illustrating a change in motor torque and rotation speed for the case where a first determination by the torque restriction control process of the vehicle control apparatus according to the embodiment of the present invention is established.
[Figure 5] Figure 5 is a time chart illustrating a change in motor torque and rotation speed for the case where a second determination by the torque restriction control process of the vehicle control apparatus according to the embodiment of the present invention is established.
[Figure 6] Figure 6 is a time chart illustrating a change in motor torque and rotation speed for the case where there is time for the first determination condition to be met by the time the second determination by the torque restriction control process of the vehicle control apparatus according to the embodiment of the present invention is established.

### [Description of Embodiment]

A vehicle control apparatus according to an embodiment of the present invention is a control apparatus of a vehicle including a motor and an inverter that supplies AC electric power to the motor using a switching element, the control apparatus including a control unit that makes a first determination to determine whether a first determination condition that torque of the motor is equal to or larger than first torque and that a rotation speed of the motor is equal to or less than a first rotation speed is met for a first determination time or not, performs first torque restriction control to restrict the torque of the motor in a case where it is determined that the first determination condition is met for the first determination time, makes a second determination to determine whether a second determination condition that the torque of the motor is equal to or larger than second torque which is smaller than the first torque and that the rotation speed of the motor is equal to or less than a second rotation speed which is higher than the first rotation speed is met for a second determination time or not, performs second torque restriction control to restrict the torque of the motor in a case where it is determined that the second determination condition is met for the second determination time, and makes the second determination time longer than the first determination time.

It is therefore possible for the vehicle control apparatus according to the embodiment of the present invention to protect a switching element from temperature rise caused by intermittent motor lock while preventing drivability degradation.

### [Embodiment]

Hereinafter, a vehicle equipped with a vehicle control apparatus according to an embodiment of the present invention will be described in detail with reference to the accompanying drawings.

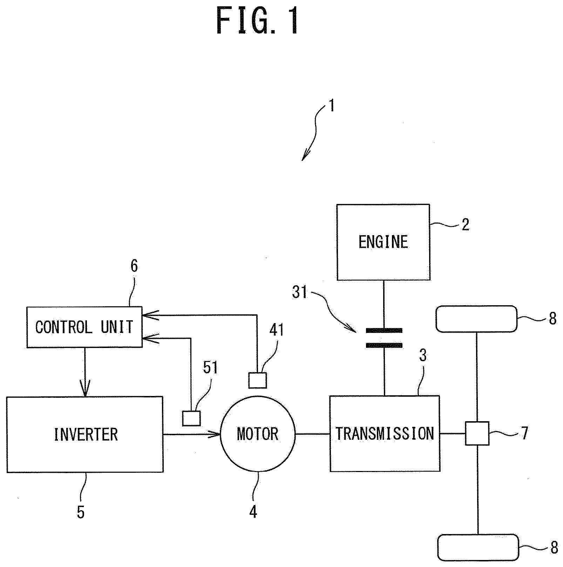

In Figure 1, a vehicle 1 according to the embodiment of the present invention is constructed by including an engine 2, a transmission 3, a motor 4, an inverter 5 and a control unit 6.

A plurality of cylinders are formed in the engine 2. The engine 2 in the present embodiment is configured to perform a series of four strokes: intake stroke, compression stroke, expansion stroke and exhaust stroke, on each cylinder.

The transmission 3 shifts the rotation output from the engine 2 and drives left and right driving wheels 8 via a differential 7. The transmission 3 is provided with a constant mesh transmission mechanism (not shown) made up of a parallel shaft gear mechanism and an actuator (not shown).

A dry type single plate clutch 31 is provided between the engine 2 and the transmission 3, and the clutch 31 connects or disconnects power transmission between the engine 2 and the transmission 3. That is, the clutch 31 functions as a power transmission mechanism that switches power transmission between the engine 2 and the driving wheels 8 to transmission or non-transmission.

The transmission 3 is constructed as a so-called AMT (automated manual transmission), and gear shift in the transmission mechanism and engagement/disengagement of the clutch 31 are performed by an actuator (not shown).

The motor 4 has a function as an electric motor driven by electric power supplied from a battery (not shown) via the inverter 5 and a function as a generator that regenerates power by reverse driving force input from the differential 7. An output shaft of the motor 4 is connected to an output shaft of the transmission 3.

The motor 4 is provided with a rotation sensor 41 as a rotation speed detection unit that detects a rotation speed of the motor 4. The rotation sensor 41 is connected to the control unit 6.

The inverter 5 converts DC electric power supplied from a battery under control of the control unit 6 to three-phase AC electric power and supplies the AC electric power to the motor 4 or converts three-phase AC electric power generated by the motor 4 to DC electric power and charges the battery.

The inverter 5 is provided with, for example, six switching elements to control three-phase AC electric power to be supplied to the motor 4 by controlling the six switching elements.

The inverter 5 is provided with a current sensor 51 that detects a current supplied from the inverter 5 to the motor 4. The current sensor 51 is connected to the control unit 6.

Thus, the vehicle 1 constructs a parallel hybrid system that can use power of both the engine 2 and the motor 4 to run the vehicle 1, and the vehicle is configured to run with power output from at least one of the engine 2 and the motor 4.

The control unit 6 is constructed of a computer unit provided with a CPU (central processing unit), a RAM (random access memory), a ROM (read only memory), a flash memory that saves backup data or the like, an input port and an output port.

The ROM of the computer unit stores various constants and various maps or the like, and a program to cause the computer unit to function as the control unit 6.

That is, the CPU executes the program stored in the ROM using the RAM as a work area, and the computer unit thereby functions as the control unit 6 in the present embodiment.

Various sensors including the aforementioned rotation sensor 41 and current sensor 51 are connected to an input port of the control unit 6.

On the other hand, in addition to the aforementioned inverter 5 and actuator of the transmission 3, various control targets including an injector (not shown) are connected to an output port of the control unit 6.

In the present embodiment, the control unit 6 determines a motor lock state from the torque of the motor 4 and a rotation speed of the motor 4, and in the case where it is determined that the motor is locked, the control unit 6 performs torque restriction control to restrict the torque of the motor 4. Restricting the torque of the motor 4 means, for example, lowering an upper limit value of the motor torque. Note that in addition to the torque restriction control, motor torque is restricted in a region where the number of revolutions of the motor is low.

The control unit 6 makes a first determination to determine whether a first determination condition that the torque of the motor 4 is equal to or larger than first torque and that the rotation speed of the motor 4 is equal to or less than a first rotation speed is met for a first determination time or not, and performs first torque restriction control to restrict the torque of the motor 4 in the case where it is determined that the first determination condition is met for the first determination time.

The control unit 6 makes a second determination to determine whether a second determination condition that the torque of the motor 4 is equal to or larger than second torque which is smaller than the first torque and that the rotation speed of the motor 4 is equal to or less than a second rotation speed which is higher than the first rotation speed is met for a second determination time or not, and performs second torque restriction control to restrict the torque of the motor 4 in the case where it is determined that the second determination condition is met for the second determination time. Here, the second determination time is longer than the first determination time.

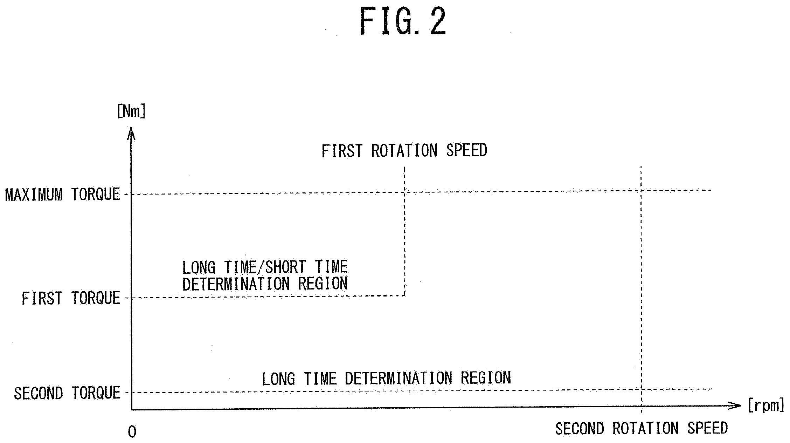

The relationship between the first determination condition and the second determination condition is as shown in Figure 2. A region described as a "long time/short time determination region" in Figure 2 is a region where the first determination condition is met. The region described as a "long time/short time determination region" and a region described as a "long time determination region" are combined to form a region where the second determination condition is met. Note that the "long time/short time determination region" is a conventional motor lock determination region.

In the "long time/short time determination region," a continuous motor lock and an intermittent motor lock are detected during the first determination time. **In** the "long time determination region," an intermittent motor lock is detected during the second determination time which is longer than the first determination time.

The control unit 6 increases a torque restriction amount of the motor 4 in the first torque restriction control more than in the second torque restriction control. Increasing the torque restriction amount of the motor 4 means making an upper torque limit value in the first torque restriction control smaller than an upper torque limit value in the second torque restriction control.

During the first determination to determine whether the first determination condition in the first torque restriction control continues for the first determination time or not, the control unit 6 performs pre-determination torque restriction control to restrict the torque of the motor 4 with a restriction amount less than the torque restriction amount of the motor 4 for the case where it is determined that the first determination condition is met for the first determination time.

By the time the second determination time in the second torque restriction control elapses, the control unit 6 increases the torque restriction amount of the motor 4 for the case where it is determined that the second determination condition is met for the second determination time as the time during which the first determination condition is met increases.

In the case of restricting the torque of the motor 4 in the first torque restriction control and the second torque restriction control, the control unit 6 starts the engine 2 and causes the vehicle 1 to run using the engine 2 as the driving source.

In the case of restricting the torque of the motor 4 in the first torque restriction control and the second torque restriction control, the control unit 6 restricts the torque of the motor 4 with a pre-completion torque restriction amount until the start of the engine 2 is complete and restricts the torque of the motor 4 with a post-completion torque restriction amount, which is larger than the pre-completion torque restriction amount after the start of the engine 2 is complete.

In the case of restricting the torque of the motor 4 in the first torque restriction control and the second torque restriction control, the control unit 6 puts the clutch 31 in a disengaged state and switches the power transmission between the engine 2 and the driving wheels 8 to non-transmission until the start of the engine 2 is complete.

In the case of restricting the torque of the motor 4 in the first torque restriction control and the second torque restriction control, the control unit 6 puts the clutch 31 in an engaged state after the start of the engine 2 is complete and starts power transmission between the engine 2 and the driving wheels 8.

In the first torque restriction control, in the case where the first determination condition is no longer met, the control unit 6 stops counting the time during which the first determination condition is met and in the case where the first determination condition is met again, the control unit 6 resumes counting the time during which the first determination condition is met.

In the second torque restriction control, in the case where the second determination condition is no longer met, the control unit 6 resets to zero the time during which the second determination condition is met.

After restricting the torque of the motor 4 by the torque restriction control, in the case where a predetermined restoration condition is met, the control unit 6 releases the restriction of the torque of the motor 4 and sets an upper torque limit as the maximum torque that the motor 4 can output. Note that when the torque of the motor 4 is restricted and released, both restriction and release of the torque of the motor 4 are controlled with a rate of change gradient. The restoration conditions may be different between the first torque restriction control and the second torque restriction control.

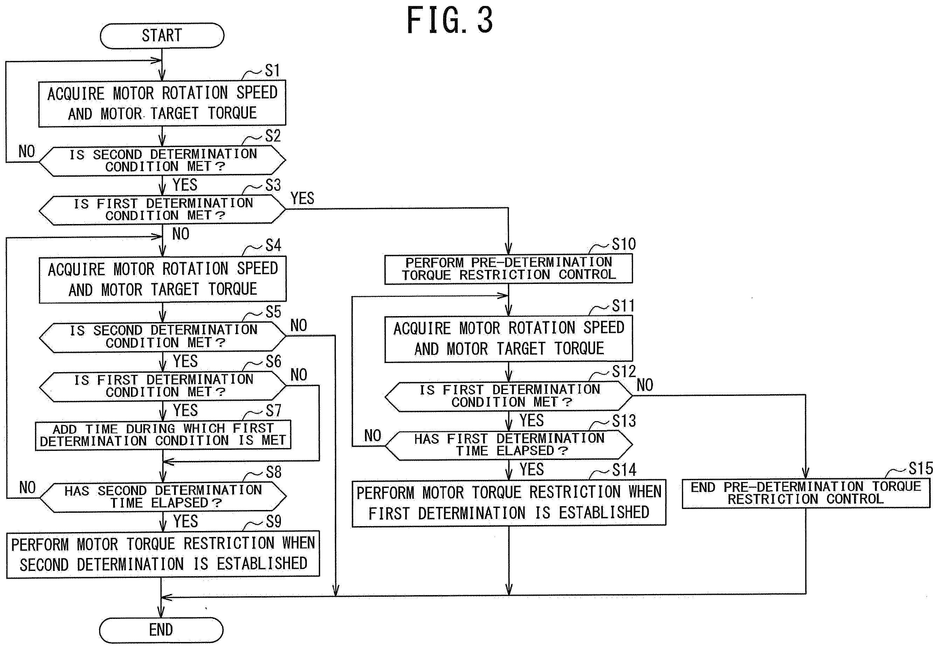

A torque restriction control process by the vehicle control apparatus according to the present embodiment configured as described above will be described with reference to Figure 3. Note that the torque restriction control process described hereunder is started when the control unit 6 starts operation and executed at a preset time interval.

In step S1, the control unit 6 acquires a motor rotation speed and a target torque of the motor 4. After executing the process in step S1, the control unit 6 executes a process in step S2.

In step S2, the control unit 6 determines whether the aforementioned second determination condition is met or not.

In the case where it is determined that the second determination condition is met, the control unit 6 executes a process in step S3. In the case where it is determined that the second determination condition is not met, the control unit 6 executes the process in step S1.

In step S3, the control unit 6 determines whether the aforementioned first determination condition is met or not.

In the case where it is determined that the first determination condition is met, the control unit 6 executes a process in step S10. In the case where it is determined that the first determination condition is not met, the control unit 6 executes a process in step S4.

In step S4, the control unit 6 acquires the motor rotation speed and the target torque of the motor 4. After executing the process in step S4, the control unit 6 executes a process in step S5.

In step S5, the control unit 6 determines whether the second determination condition is met or not.

In the case where it is determined that the second determination condition is met, the control unit 6 executes a process in step S6. In the case where it is determined that the second determination condition is not met, the control unit 6 ends the torque restriction control process.

In step S6, the control unit 6 determines whether the first determination condition is met or not.

In the case where it is determined that the first determination condition is met, the control unit 6 executes a process in step S7. In the case where it is determined that the first determination condition is not met, the control unit 6 executes a process in step S8.

In step S7, the control unit 6 adds a predetermined amount of time to the time during which the first determination condition is met. After executing the process in step S7, the control unit 6 executes the process in step S8.

In step S8, the control unit 6 determines whether a second determination time has elapsed or not.

In the case where it is determined that the second determination time has elapsed, the control unit 6 executes a process in step S9. In the case where it is determined that the second determination time has not elapsed, the control unit 6 executes the process in step S4.

In step S9, the control unit 6 restricts the torque of the motor 4 when the second determination is met. After executing the process in step S9, the control unit 6 ends the torque restriction control process.

In step S10, the control unit 6 performs the aforementioned pre-determination torque restriction control. After executing the process in step S10, the control unit 6 executes a process in step S11.

In step S11, the control unit 6 acquires the motor rotation speed and the target torque of the motor 4. After executing the process in step S11, the control unit 6 executes a process in step S12.

In step S12, the control unit 6 determines whether the first determination condition is met or not.

In the case where it is determined that the first determination condition is met, the control unit 6 executes a process in step S13. In the case where it is determined that the first determination condition is not met, the control unit 6 executes a process in step S15.

In step S13, the control unit 6 determines whether the first determination time has elapsed or not.

In the case where it is determined that the first determination time has elapsed, the control unit 6 executes a process in step S14. In the case where it is determined that the first determination time has not elapsed, the control unit 6 executes the process in step S11.

In step S14, the control unit 6 restricts the torque of the motor 4 when the first determination is met. After executing the process in step S14, the control unit 6 ends the torque restriction control process.

In step S15, the control unit 6 ends the pre-determination torque restriction control. After executing the process in step S15, the control unit 6 ends the torque restriction control process.

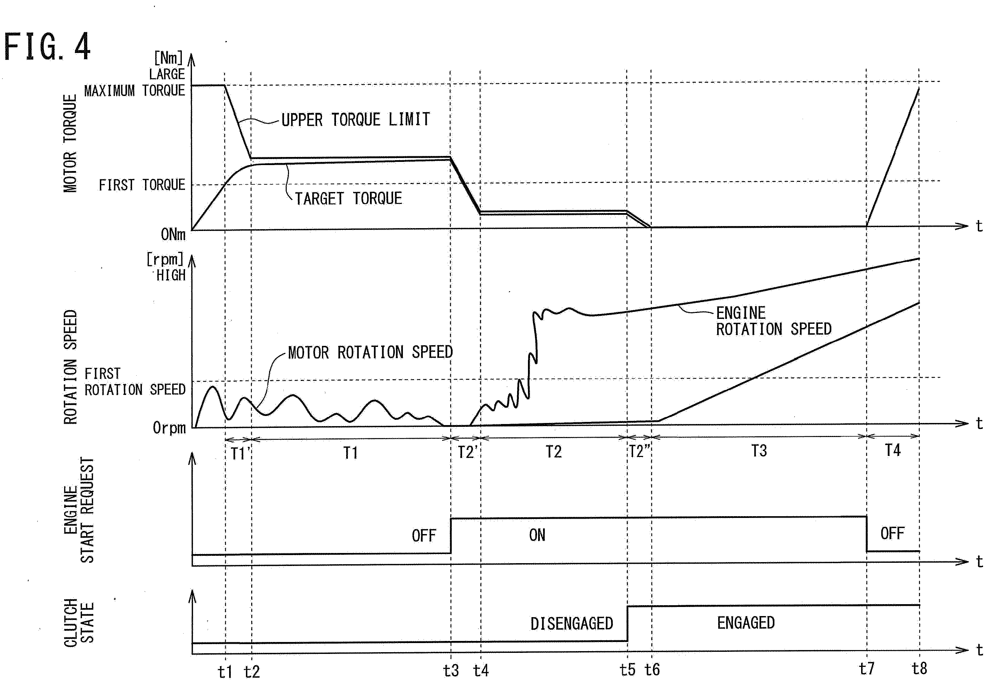

Operation by such a torque restriction control process will be described with reference to Figure 4 to Figure 6.

Figure 4 illustrates a case where the first determination is established. At time t1 as shown in Figure 4, the target torque of the motor 4 becomes equal to or larger than the first torque and when the first determination condition is met, a pre-determination phase T1' is entered in which the pre-determination torque restriction control is performed and the upper torque limit is lowered.

At time t2, when the upper torque limit is lowered to a predetermined torque, a determination phase T1 is entered.

At time t3, when the first determination is established in which the first determination condition continues by the first determination time, a first pre-restriction phase T2' is entered in which the engine 2 starts to run and the upper torque limit is lowered until the torque restriction amount becomes a pre-completion torque restriction amount.

At time t4, when the upper torque limit is lowered until the torque restriction amount becomes the pre-completion torque restriction amount, a first restriction phase T2 is entered.

At time t5, when the start of the engine 2 is complete, a first post-restriction phase T2" is entered in which the clutch 31 is put in an engaged state and the upper torque limit is lowered until the torque restriction amount becomes a post-completion torque restriction amount.

At time t6, when the upper torque limit is lowered until the torque restriction amount becomes the post-completion torque restriction amount, a second restriction phase T3 is entered and the rotation speed of the motor 4 increases.

At time t7, when the restoration condition is met, a restoration phase T4 is entered in which the upper torque limit is increased to a maximum torque.

At time t8, when the upper torque limit is increased to the maximum torque, the restoration phase T4 ends and the torque restriction control ends.

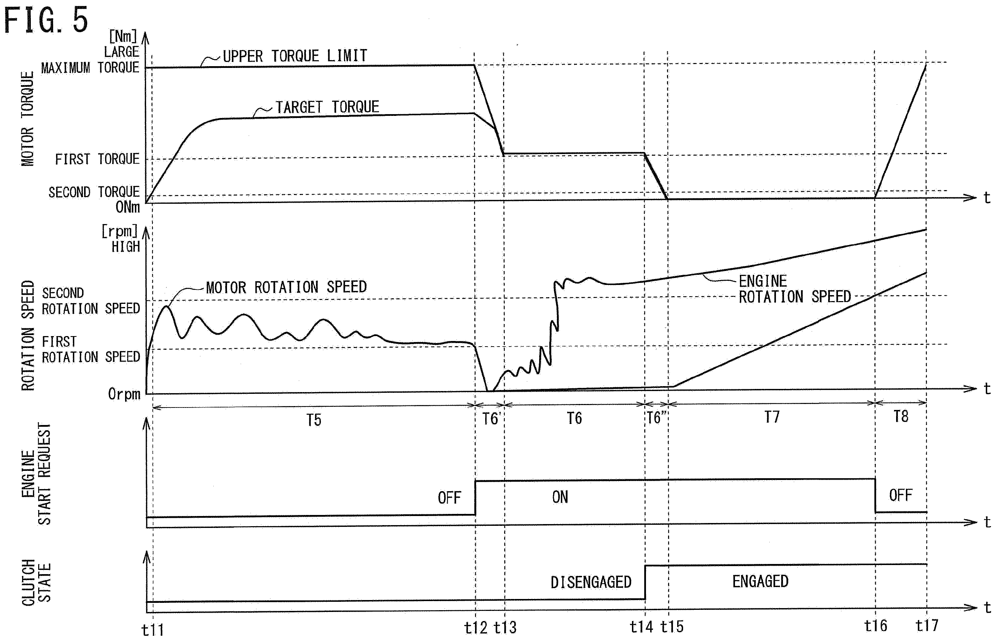

Figure 5 illustrates a case where a second determination is established. At time t11 as shown in Figure 5, when the target torque of the motor 4 becomes equal to or larger than the second torque and the second determination condition is met, a determination phase T5 is entered.

At time t12, when the second determination is established in which the second determination condition continues for the second determination time, a pre-completion pre-restriction phase T6' is entered in which the engine 2 starts to run and the upper torque limit is lowered until the torque restriction amount becomes the pre-completion torque restriction amount.

At time t13, when the upper torque limit is lowered until the torque restriction amount becomes the pre-completion torque restriction amount, a pre-completion restriction phase T6 is entered.

At time t14, when the start of the engine 2 is complete, a pre-completion post-restriction phase T6" is entered in which the clutch 31 is put in an engaged state and the upper torque limit is lowered until the torque restriction amount becomes the post-completion torque restriction amount.

At time t15, when the upper torque limit is lowered until the torque restriction amount becomes the post-completion torque restriction amount, a post-completion restriction phase T7 is entered and the rotation speed of the motor 4 increases.

At time t16, when the restoration condition is met, a restoration phase T8 is entered in which the upper torque limit is increased to a maximum torque.

At time t17, when the upper torque limit is increased to the maximum torque, the restoration phase T8 ends and the torque restriction control ends.

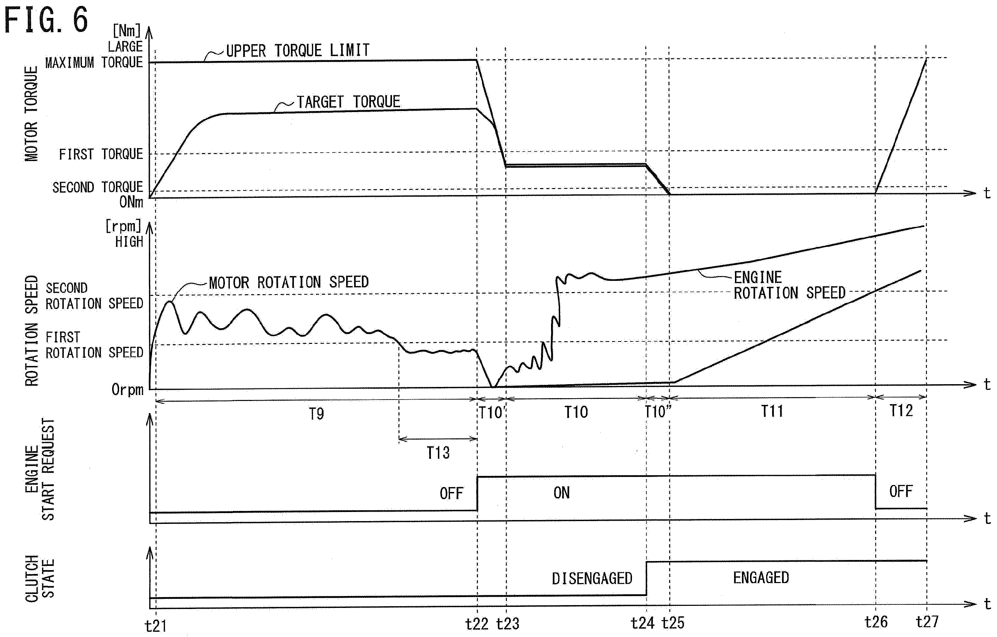

Figure 6 illustrates a case where there is time during which the first determination condition is met by the time the second determination is established. At time t21 as shown in Figure 6, when the target torque of the motor 4 becomes equal to or larger than the second torque and the second determination condition is met, a determination phase T9 is entered. In the determination phase T9, the first determination condition is met for T13.

At time t22, when the second determination is established in which the second determination condition continues for the second determination time, a pre-completion/pre-restriction phase T10' is entered in which the engine 2 starts to run, and the upper torque limit is lowered until the torque restriction amount becomes a restriction amount which is the sum of the pre-completion torque restriction amount and a restriction amount corresponding to the time of T13 in which the first determination condition is met.

At time t23, when the upper torque limit is lowered until the torque restriction amount becomes a restriction amount which is the sum of the pre-completion torque restriction amount and the restriction amount corresponding to the time of T13 in which the first determination condition is met, a pre-completion restriction phase T10 is entered.

At time t24, when the start of the engine 2 is complete, a pre-completion post-restriction phase T10" is entered in which the clutch 31 is engaged and the upper torque limit is lowered until the torque restriction amount becomes the post-completion torque restriction amount.

At time t25, when the upper torque limit is lowered until the torque restriction amount becomes the post-completion torque restriction amount, a post-completion restriction phase T11 is entered and the rotation speed of the motor 4 increases.

At time t26, when the restoration condition is met, a restoration phase T12 is entered in which the upper torque limit is increased to a maximum torque.

At time t27, when the upper torque limit increases to the maximum torque, the restoration phase T12 ends and the torque restriction control ends.

Thus, in the present embodiment, the control unit 6 makes the first determination to determine whether the first determination condition that torque of the motor 4 is equal to or larger than the first torque and that the rotation speed of the motor 4 is equal to or less than the first rotation speed is met for the first determination time or not, performs the first torque restriction control to restrict the torque of the motor 4 in the case where it is determined that the first determination condition is met for the first determination time, makes the second determination to determine whether the second determination condition that the torque of the motor 4 is equal to or larger than the second torque which is smaller than the first torque and that the rotation speed of the motor 4 is equal to or less than the second rotation speed which is higher than the first rotation speed is met for the second determination time or not, performs the second torque restriction control to restrict the torque of the motor 4 in the case where it is determined that the second determination condition is met for the second determination time, and makes the second determination time longer than the first determination time.

In this way, since two determination regions with different torques and rotation speeds of the motor 4 are used, even if the torque of the motor 4 fluctuates near the first torque or the rotation speed of the motor 4 fluctuates near the first rotation speed and the first torque restriction control cannot be performed, it is possible to determine the motor lock according to the second determination condition and restrict the torque of the motor 4, and it is thereby possible to protect the switching element from temperature rise due to an intermittent motor lock state.

By making the second determination time longer than the first determination time, it is possible to suppress situations in which the torque of the motor 4 is likely to be restricted and prevent drivability degradation.

Thus, it is possible to protect the switching element from temperature rise caused by intermittent motor lock while preventing drivability degradation.

The control unit 6 makes the torque restriction amount of the motor 4 larger in the first torque restriction control than in the second torque restriction control.

The motor lock determined in a situation with torque equal to or larger than the first torque and a rotation speed equal to or less than the first rotation speed shows a higher torque of the motor 4 and a lower rotation speed of the motor 4 than the motor lock determined in a situation with torque equal to or larger than the second torque and a rotation speed equal to or less than the second rotation, and therefore a load on the switching element tends to be large and the heat generated by the switching element tends to be high.

Thus, by making the torque restriction amount of the motor 4 larger in the first torque restriction control than in the second torque restriction control, it is possible to further protect the switching element from temperature rise due to motor lock.

During the first determination, the control unit 6 performs the pre-determination torque restriction control to restrict the torque of the motor 4 with a restriction amount smaller than the torque restriction amount of the motor 4 for the case where it is determined that the first determination condition is met for the first determination time.

The load on the switching element tends to be larger and the heat generated in the switching element tends to be higher during the first determination than during the second determination, and so the temperature of the switching element may rise excessively during the determination and even when the torque of the motor 4 is restricted after the determination is established, it may be impossible to protect the switching element.

Therefore, during the first determination, by restricting the torque of the motor 4 with a restriction amount smaller than the torque restriction amount of the motor 4 for the case where it is determined that the first determination condition is met for the first determination time, it is possible to prevent temperature rise of the switching element during determination and protect the switching element while securing the determination time.

By the time the second determination time of the second torque restriction control elapses, the control unit 6 increases the torque restriction amount of the motor 4 for the case where it is determined that the second determination condition is met for the second determination time as the time during which the first determination condition is met increases.

Even during the second determination, in a situation where the torque of the motor 4 is equal to or larger than the first torque and the rotation speed of the motor 4 is equal to or less than the first rotation speed, that is, in a region where the first determination condition is met, the load on the switching element tends to be large and the heat generated in the switching element tends to be high.

Thus, by increasing the torque restriction amount of the motor 4 as the time in a situation where the load is large during the second determination (situation where the first determination condition is met) increases, it is possible to further protect the switching element from temperature rise.

In the case of restricting the torque of the motor 4 in the first torque restriction control and the second torque restriction control, the control unit 6 starts the engine 2 and causes the vehicle 1 to run using the engine 2 as the driving source.

When the torque of the motor 4 is restricted to suppress temperature rise of the switching element, the vehicle 1 may not be able to run and drivability may be degraded.

Thus, by starting the engine 2 in the case of restricting the torque of the motor 4 in the first torque restriction control and the second torque restriction control, it is possible to run the vehicle using the engine 2 even when the torque of the motor 4 is restricted, and it is thereby possible to protect the switching element from temperature rise due to intermittent motor lock while preventing drivability degradation.

In the case of restricting the torque of the motor 4 in the first torque restriction control and the second torque restriction control, the control unit 6 restricts the torque of the motor 4 with the pre-completion torque restriction amount until the start of the engine 2 is complete, restricts the torque of the motor 4 with the post-completion torque restriction amount larger than the pre-completion torque restriction amount after the start of the engine 2 is complete, puts the clutch 31 in the disengaged state until the start of the engine 2 is complete, switches power transmission between the engine 2 and the driving wheels 8 to non-transmission, puts the clutch 31 in the engaged state after the start of the engine 2 is complete, and starts power transmission between the engine 2 and the driving wheels 8.

If the torque restriction amount of the motor 4 is increased before the start of the engine 2 is complete, the torque of the vehicle 1 may suddenly become insufficient and drivability may degrade.

Therefore, by increasing the torque restriction amount of the motor 4 after the start of the engine 2 is complete and starting power transmission between the engine 2 and the driving wheels 8, it is possible to protect the switching element from temperature rise caused by intermittent motor lock while preventing drivability degradation.

**In** the first torque restriction control, in the case where the first determination condition is no longer met, the control unit 6 stops counting the time during which the first determination condition is met, and in the case where the first determination condition is met again, the control unit 6 resumes counting the time during which the first determination condition is met, whereas in the second torque restriction control, in the case where the second determination condition is no longer met, the control unit 6 resets to zero the time during which the second determination condition is met.

During the first determination, in the case where the torque and the rotation speed of the motor 4 become outside the region where the first determination condition is met, by stopping counting the time during which the first determination condition is met, even when going back and forth between the determination regions of the first determination condition in a short time, the torque of the motor 4 is restricted using the accumulated time and so it is possible to protect the switching element from temperature rise due to intermittent motor lock.

On the other hand, if the time during which the second determination condition is met during the second determination is handled similarly to the time during which the first determination condition is met during the first determination, the torque of the motor 4 is restricted more frequently, leading to drivability degradation during normal running.

Thus, during the second determination, in the case where the second determination condition is no longer met, the time during which the second determination condition is met is reset to zero, and it is thereby possible to protect the switching element without degrading drivability during normal running.

Although an example has been described in the present embodiment where the control unit 6 performs various determinations and calculations based on various kinds of sensor information, without being limited to this, the vehicle 1 may be provided with a communication unit communicable with an external apparatus such as an external server, the external apparatus may perform various determinations and calculations based on detection information of various sensors transmitted from the communication unit, the communication unit may receive determination results and calculation results and various kinds of control may be performed using the received determination results and calculation results.

Although an embodiment of the present invention has been disclosed, it is obvious that changes can be added by those skilled in the art without departing from the scope of the present invention.

### [Reference Signs List]

1...vehicle, 2...engine, 4...motor, 5...inverter, 6...control unit, 8...driving wheel, 31...clutch (power transmission mechanism), 41... rotation sensor, 51...current sensor

## Claims

1. A control apparatus of a vehicle (1) comprising a motor (4) and an inverter (5) that is configured to supply AC electric power to the motor (4) using a switching element, the control apparatus of the vehicle comprising
a control unit (6) that makes a first determination to determine whether a first determination condition that a torque of the motor (4) is equal to or larger than a first torque and that a rotation speed of the motor (4) is equal to or less than a first rotation speed is met for a first determination time or not, performs first torque restriction control to restrict the torque of the motor (4) in a case where it is determined that the first determination condition is met for the first determination time, makes a second determination to determine whether a second determination condition that the torque of the motor (4) is equal to or larger than second torque which is smaller than the first torque and that the rotation speed of the motor (4) is equal to or less than a second rotation speed which is higher than the first rotation speed is met for a second determination time or not, performs second torque restriction control to restrict the torque of the motor (4) in a case where it is determined that the second determination condition is met for the second determination time, and makes the second determination time longer than the first determination time.

2. The control apparatus of the vehicle as claimed in claim 1, wherein the control unit (6) makes a torque restriction amount of the motor (4) larger in the first torque restriction control than in the second torque restriction control.

3. The control apparatus of the vehicle as claimed in claim 1 or 2, wherein during the first determination, the control unit (6) performs a pre-determination torque restriction control to restrict the torque of the motor (4) with a restriction amount smaller than a torque restriction amount of the motor (4) for the case where it is determined that the first determination condition is met for the first determination time.

4. The control apparatus of the vehicle as claimed in any one of claims 1 to 3, wherein the control unit (6) increases a torque restriction amount of the motor (4) for the case where it is determined that the second determination condition is met for the second determination time as the time during which the first determination condition is met increases by the time the second determination time of the second torque restriction control elapses.

5. The control apparatus of the vehicle as claimed in any one of claims 1 to 4, wherein
the vehicle (1) comprises an engine (2) as a driving source, and
in a case of restricting the torque of the motor (4) in the first torque restriction control and the second torque restriction control, the control unit (6) starts the engine (2) and causes the vehicle (1) to run using the engine (2) as the driving source.

6. The control apparatus of the vehicle as claimed in claim 5, wherein
the vehicle (1) comprises a power transmission mechanism (31) that can switch power transmission between the engine (2) and a driving wheel (8) to transmission or non-transmission, and
in a case of restricting the torque of the motor (4) in the first torque restriction control and the second torque restriction control, the control unit (6) restricts the torque of the motor (4) with a pre-completion torque restriction amount until the start of the engine (2) is complete, restricts the torque of the motor (4) with a post-completion torque restriction amount larger than the pre-completion torque restriction amount after the start of the engine (2) is complete, switches power transmission between the engine (2) and the driving wheel (8) to non-transmission via the power transmission mechanism (31) until the start of the engine (2) is complete, and starts power transmission between the engine (2) and the driving wheel (8) via the power transmission mechanism (31) after the start of the engine (2) is complete.

7. The control apparatus of the vehicle as claimed in any one of claims 1 to 3, wherein
in the first torque restriction control, in a case where the first determination condition is no longer met, the control unit (6) stops counting the time during which the first determination condition is met, and in a case where the first determination condition is met again, the control unit (6) resumes counting the time during which the first determination condition is met, whereas in the second torque restriction control, in a case where the second determination condition is no longer met, the control unit (6) resets the time during which the second determination condition is met.

## Patentansprüche

1. Eine Steuervorrichtung eines Fahrzeugs (1), das einen Motor (4) und einen Wechselrichter (5) aufweist, der dazu konfiguriert ist, dem Motor (4) unter Verwendung eines Schaltelements Wechselstrom zuzuführen, wobei die Steuervorrichtung des Fahrzeugs aufweist:
eine Steuereinheit (6), die: eine erste Bestimmung durchführt, um zu bestimmen, ob eine erste Bestimmungsbedingung, dass ein Drehmoment des Motors (4) gleich einem oder größer als ein erstes Drehmoment ist und dass eine Drehzahl des Motors (4) gleich einer oder kleiner als eine erste Drehzahl ist, für eine erste Bestimmungszeit erfüllt ist oder nicht,
eine erste Drehmomentbegrenzungssteuerung durchführt, um das Drehmoment des Motors (4) in einem Fall zu begrenzen, in dem bestimmt wird, dass die erste Bestimmungsbedingung für die erste Bestimmungszeit erfüllt ist,
eine zweite Bestimmung durchführt, um zu bestimmen, ob eine zweite Bestimmungsbedingung, dass das Drehmoment des Motors (4) gleich einem oder größer als ein zweites Drehmoment ist, das kleiner als das erste Drehmoment ist, und dass die Drehzahl des Motors (4) gleich einer oder kleiner als eine zweite Drehzahl ist, die höher als die erste Drehzahl ist, für eine zweite Bestimmungszeit erfüllt ist oder nicht,
eine zweite Drehmomentbegrenzungssteuerung durchführt, um das Drehmoment des Motors (4) in einem Fall zu begrenzen, in dem bestimmt wird, dass die zweite Bestimmungsbedingung für die zweite Bestimmungszeit erfüllt ist, und
die zweite Bestimmungszeit länger als die erste Bestimmungszeit macht.

2. Die Steuervorrichtung des Fahrzeugs nach Anspruch 1, wobei die Steuereinheit (6) einen Drehmomentbegrenzungsbetrag des Motors (4) bei der ersten Drehmomentbegrenzungssteuerung größer macht als bei der zweiten Drehmomentbegrenzungssteuerung.

3. Die Steuervorrichtung des Fahrzeugs nach Anspruch 1 oder 2, wobei während der ersten Bestimmung die Steuereinheit (6) eine Vorbestimmungs-Drehmomentbegrenzungssteuerung durchführt, um das Drehmoment des Motors (4) mit einem Begrenzungsbetrag zu begrenzen, der kleiner ist als ein Drehmomentbegrenzungsbetrag des Motors (4) für den Fall, dass bestimmt wird, dass die erste Bestimmungsbedingung für die erste Bestimmungszeit erfüllt ist.

4. Die Steuervorrichtung des Fahrzeugs nach einem der Ansprüche 1 bis 3, wobei die Steuereinheit (6) einen Drehmomentbegrenzungsbetrag des Motors (4) für den Fall, dass bestimmt wird, dass die zweite Bestimmungsbedingung für die zweite Bestimmungszeit erfüllt ist, in dem Maße erhöht, wie die Zeit, während der die erste Bestimmungsbedingung erfüllt ist, bis zum Ablauf der zweiten Bestimmungszeit der zweiten Drehmomentbegrenzungssteuerung zunimmt.

5. Die Steuervorrichtung des Fahrzeugs nach einem der Ansprüche 1 bis 4, wobei
das Fahrzeug (1) einen Verbrennungsmotor (2) als eine Antriebsquelle aufweist, und
in einem Fall der Begrenzung des Drehmoments des Motors (4) bei der ersten Drehmomentbegrenzungssteuerung und der zweiten Drehmomentbegrenzungssteuerung die Steuereinheit (6) den Verbrennungsmotor (2) startet und das Fahrzeug (1) veranlasst, den Verbrennungsmotor (2) als Antriebsquelle zu verwenden.

6. Die Steuervorrichtung des Fahrzeugs nach Anspruch 5, wobei
das Fahrzeug (1) einen Kraftübertragungsmechanismus (31) aufweist, der die Kraftübertragung zwischen dem Verbrennungsmotor (2) und einem Antriebsrad (8) auf Übertragung oder Nicht-Übertragung umschalten kann, und
in einem Fall der Begrenzung des Drehmoments des Motors (4) bei der ersten Drehmomentbegrenzungssteuerung und der zweiten Drehmomentbegrenzungssteuerung die Steuereinheit (6) das Drehmoment des Motors (4) mit einem Vor-Abschluss-Drehmomentbegrenzungsbetrag begrenzt, bis der Start des Verbrennungsmotors (2) abgeschlossen ist, das Drehmoment des Motors (4) mit einem Nach-Abschluss-Drehmomentbegrenzungsbetrag begrenzt, der größer ist als der Vor-Abschluss-Drehmomentbegrenzungsbetrag, nachdem der Start des Verbrennungsmotors (2) abgeschlossen ist, die Kraftübertragung zwischen dem Verbrennungsmotor (2) und dem Antriebsrad (8) über den Kraftübertragungsmechanismus (31) auf Nicht-Übertragung umschaltet, bis der Start des Verbrennungsmotors (2) abgeschlossen ist, und die Kraftübertragung zwischen dem Verbrennungsmotor (2) und dem Antriebsrad (8) über den Kraftübertragungsmechanismus (31) startet, nachdem der Start des Verbrennungsmotors (2) abgeschlossen ist.

7. Die Steuervorrichtung des Fahrzeugs nach einem der Ansprüche 1 bis 3, wobei
bei der ersten Drehmomentbegrenzungssteuerung in einem Fall, in dem die erste Bestimmungsbedingung nicht mehr erfüllt ist, die Steuereinheit (6) das Zählen der Zeit stoppt, während der die erste Bestimmungsbedingung erfüllt ist, und in einem Fall, in dem die erste Bestimmungsbedingung wieder erfüllt ist, die Steuereinheit (6) das Zählen der Zeit wieder aufnimmt, während der die erste Bestimmungsbedingung erfüllt ist,
während bei der zweiten Drehmomentbegrenzungssteuerung in einem Fall, in dem die zweite Bestimmungsbedingung nicht mehr erfüllt ist, die Steuereinheit (6) die Zeit zurücksetzt, während der die zweite Bestimmungsbedingung erfüllt ist.

## Revendications

1. Un appareil de commande d'un véhicule (1) comprenant un moteur (4) et un onduleur (5) qui est configuré pour fournir une puissance électrique alternative au moteur (4) en utilisant un élément de commutation, l'appareil de commande du véhicule comprenant :
une unité de commande (6) qui
effectue une première détermination pour déterminer si une première condition de détermination, selon laquelle un couple du moteur (4) est égal ou supérieur à un premier couple et une vitesse de rotation du moteur (4) est égale ou inférieure à une première vitesse de rotation, est satisfaite ou non pendant une première durée de détermination,
effectue une première commande de restriction de couple pour restreindre le couple du moteur (4) dans un cas où il est déterminé que la première condition de détermination est satisfaite pendant la première durée de détermination,
effectue une deuxième détermination pour déterminer si une deuxième condition de détermination, selon laquelle le couple du moteur (4) est égal ou supérieur à un deuxième couple qui est inférieur au premier couple et la vitesse de rotation du moteur (4) est égale ou inférieure à une deuxième vitesse de rotation qui est supérieure à la première vitesse de rotation, est satisfaite ou non pendant une deuxième durée de détermination,
effectue une deuxième commande de restriction de couple pour restreindre le couple du moteur (4) dans un cas où il est déterminé que la deuxième condition de détermination est satisfaite pendant la deuxième durée de détermination, et
rend la deuxième durée de détermination plus longue que la première durée de détermination.

2. L'appareil de commande du véhicule selon la revendication 1, dans lequel l'unité de commande (6) rend une quantité de restriction de couple du moteur (4) plus grande dans la première commande de restriction de couple que dans la deuxième commande de restriction de couple.

3. L'appareil de commande du véhicule selon la revendication 1 ou 2, dans lequel, pendant la première détermination, l'unité de commande (6) effectue une commande de restriction de couple de prédétermination pour restreindre le couple du moteur (4) avec une quantité de restriction inférieure à une quantité de restriction de couple du moteur (4) pour le cas où il est déterminé que la première condition de détermination est satisfaite pendant la première durée de détermination.

4. L'appareil de commande du véhicule selon l'une quelconque des revendications 1 à 3, dans lequel l'unité de commande (6) augmente une quantité de restriction de couple du moteur (4) pour le cas où il est déterminé que la deuxième condition de détermination est satisfaite pendant la deuxième durée de détermination, à mesure que la durée pendant laquelle la première condition de détermination est satisfaite augmente, au moment où la deuxième durée de détermination de la deuxième commande de restriction de couple s'écoule.

5. L'appareil de commande du véhicule selon l'une quelconque des revendications 1 à 4, dans lequel
le véhicule (1) comprend un moteur thermique (2) en tant que source d'entraînement, et
dans un cas de restriction du couple du moteur (4) dans la première commande de restriction de couple et la deuxième commande de restriction de couple, l'unité de commande (6) démarre le moteur thermique (2) et amène le véhicule (1) à se déplacer en utilisant le moteur thermique (2) en tant que source d'entraînement.

6. L'appareil de commande du véhicule selon la revendication 5, dans lequel
le véhicule (1) comprend un mécanisme de transmission de puissance (31) qui peut commuter la transmission de puissance entre le moteur thermique (2) et une roue motrice (8) en transmission ou en non-transmission, et
dans un cas de restriction du couple du moteur (4) dans la première commande de restriction de couple et la deuxième commande de restriction de couple, l'unité de commande (6) restreint le couple du moteur (4) avec une quantité de restriction de couple de pré-achèvement jusqu'à ce que le démarrage du moteur thermique (2) soit terminé, restreint le couple du moteur (4) avec une quantité de restriction de couple de post-achèvement plus grande que la quantité de restriction de couple de pré-achèvement après que le démarrage du moteur thermique (2) est terminé, commute la transmission de puissance entre le moteur thermique (2) et la roue motrice (8) en non-transmission par l'intermédiaire du mécanisme de transmission de puissance (31) jusqu'à ce que le démarrage du moteur thermique (2) soit terminé, et démarre la transmission de puissance entre le moteur thermique (2) et la roue motrice (8) par l'intermédiaire du mécanisme de transmission de puissance (31) après que le démarrage du moteur thermique (2) est terminé.

7. L'appareil de commande du véhicule selon l'une quelconque des revendications 1 à 3, dans lequel
dans la première commande de restriction de couple, dans un cas où la première condition de détermination n'est plus satisfaite, l'unité de commande (6) arrête de compter la durée pendant laquelle la première condition de détermination est satisfaite, et dans un cas où la première condition de détermination est à nouveau satisfaite, l'unité de commande (6) reprend le comptage de la durée pendant laquelle la première condition de détermination est satisfaite,
tandis que dans la deuxième commande de restriction de couple, dans un cas où la deuxième condition de détermination n'est plus satisfaite, l'unité de commande (6) réinitialise la durée pendant laquelle la deuxième condition de détermination est satisfaite.
